# FASCICULE DE BREVET EUROPEEN

(11) **EP 1 554 201 B1**
(45) Date de publication et mention de la délivrance du brevet: **21.02.2007**
(21) Numéro de dépôt: 03778420.4
(22) Date de dépôt: 21.10.2003
(51) Int. Cl.: B65G 47/256

(54) **DISPOSITIF DE DISTRIBUTION DE PIECES, NOTAMMENT DE RIVETS, DELIVREES EN SORTIE D'UN MOYEN DE STOCKAGE TEL UN BOL VIBRANT, ET SON PROCEDE DE TRAVAIL**
VORRICHTUNG ZUR VERTEILUNG VON TEILEN, INSBESONDERE VON NIETEN, DIE AM AUSGANG EINES SPEICHERS, Z.B. EINES SCHWINGTOPFES, ABGEGEBEN WERDEN, SOWIE VERFAHREN DAFÜR
DEVICE FOR DISPENSING PARTS, FOR EXAMPLE RIVETS, WHICH ARE DELIVERED AT THE OUTLET OF A STORAGE MEANS SUCH AS A VIBRATING BOWL, AND OPERATING METHOD THEREOF

(30) Priorité: 21.10.2002 FR 0213346
(43) Date de publication de la demande: 20.07.2005
(73) Titulaire: F2 C2 System, 31131 Balma Cedex (FR); Auriol, Jean-Marc, 31130 Flourens (FR); Bornes, Philippe, 31130 Flourens (FR)
(72) Inventeur: AURIOL, Jean-Marc, F-31130 Flourens (FR); BORNES, Philippe, F-31130 Flourens (FR)
(74) Mandataire: Thurgood, Alexander John
(86) Numéro de dépôt international: PCT/FR2003/003113
(87) Numéro de publication internationale: WO 2004/037691

(56) Documents cités:
- US-A- 4 515 260
- US-A- 5 385 434
- US-B1- 6 257 392

## Description

### DOMAINE D'APPLICATION DE L'INVENTION

La présente invention a trait au domaine des bols vibrants et notamment aux adaptations permettant de mieux gérer l'orientation et la distribution des pièces délivrées en sortie de moyens de stockage et de distribution unitaire tels les bols vibrants.

### DESCRIPTION DE L'ART ANTÉRIEUR

Il existe dans l'art antérieur une pluralité de dispositifs de type bols vibrants, tel celui décrit dans le document américain n° 6,257,392, qui utilisent tous le même principe à savoir, la communication de vibrations à des pièces stockées à l'intérieur du bol de façon à leur faire parcourir un trajet précis leur permettant de sortir dudit bol, l'une derrière l'autre et la plupart du temps en contact avec la pièce précédente ainsi qu'avec la suivante.

Ces bols ne peuvent néanmoins proposer dans le cadre du stockage et de la distribution de pièces dissymétriques, une orientation systématique et sûre de la pièce en sortie de bol. Le fait que les pièces soient l'une derrière l'autre et la plupart du temps en contact avec la pièce précédente ainsi qu'avec la suivante participe à la difficulté de la mise en place d'une orientation fixe. Or, cette orientation est particulièrement importante notamment dans les applications de rivetage dans lesquelles des rivets doivent être fournis selon une orientation définie à l'avance, à un nouveau dispositif de stockage ou à un dispositif de rivetage. En effet, bien que présentant classiquement une symétrie de révolution, les rivets sont en général également dissymétriques en présentant sur leur longueur des diamètres différents puisqu'ils sont ménagés classiquement d'une tige et d'une tête. Certains rivets, tels les rivets aveugles présentent une tige de part et d'autre de la tête, chaque tige ayant une fonction différente. Aussi, il est particulièrement important que ces rivets soient tous orientés de la même façon pour se présenter par exemple par rapport à leur sens d'avancement avec la tête à l'arrière du dispositif de rivetage.

En effet, un défaut d'orientation peut avoir pour conséquence un mauvais rivetage associé ou non à un endommagement du dispositif réalisant la phase suivant cette phase préalable de distribution en sortie de bol vibrant. Le risque toujours possible d'une mauvaise orientation et d'un endommagement d'un actionneur tel une tête de perçage/rivetage a amené les concepteurs de ce type de dispositifs à multiplier les moyens de contrôle le long du trajet d'acheminement du rivet jusqu'à la tête, ce qui a provoqué l'augmentation du coût de telles installations.

Il existe également plusieurs dispositifs pour assurer le retournement d'une pièce à l'intérieur d'une installation de mise en mouvement de pièces tels les rivets, mais jusqu'ici le bon positionnement ou la bonne orientation des pièces tels les rivets n'étaient sûrement détectés qu'en fin de mouvement, c'est à dire au niveau de la tête de perçage-rivetage car il s'avère très difficile de détecter la bonne orientation d'un rivet.

Parmi ces dispositifs, celui proposé dans le document américain n° 5,385,434 qui décrit un dispositif de distribution d'un moyen de stockage vers un effecteur, de pièces de type composants de connecteur électrique qui différent des rivets et surtout des rivets aveugles. Ce dispositif est remarquable en ce qu'il comprend
- des moyens de distribution connectés à un conduit de distribution et mis en oeuvre par un jet à haute pression permettant de créer une pression différentielle produisant un effet d'aspiration causant le mouvement à l'intérieur d'une conduite des pièces du moyen de stockage vers l'effecteur,
- des moyens d'alimentation unitaire situés en amont des moyens de distribution et mis en oeuvre par un sélecteur rotatif,
- des moyens d'orientation situés en amont des moyens de distribution et mis en oeuvre par une rainure dans laquelle se déplacent les pièces qui ne peuvent s' y orienter que d'une seule façon.

Ce dispositif a pour avantage d'utiliser l'air comprimé pour éviter l'utilisation de la gravité pour alimenter les effecteurs et orienter les pièces pour les effecteurs. Ce déplacement d'air permet également de mettre en mouvement les pièces à distribuer du moyen de stockage, qui n'est pas un bol vibrant, vers le moyen de distribution.

### DESCRIPTION DE L'INVENTION

Partant de cet état de fait, les demandeurs ont mené des recherches afin d'obvier aux inconvénients précités en proposant une solution susceptible d'éviter de façon efficace une mauvaise orientation des pièces délivrées en sortie de moyens de stockage et de distribution unitaire tels les bols vibrants.

Ces recherches ont abouti à la conception d'un dispositif de distribution de pièces, notamment de rivets, délivrées en sortie de moyens de stockage tels des bols vibrants particulièrement avantageux et de conception simple, garantissant une distribution bien orientée de la pièce délivrée.

Selon l'invention, le dispositif assure la distribution de pièces notamment de rivets délivrées en sortie d'un moyen de stockage tel un bol vibrant qui présente au niveau de sa sortie un chemin de déplacement desdites pièces, un module de commande autorisant l'entrée une à une des pièces délivrées par ledit moyen de stockage et de distribution à l'intérieur d'une conduite.

Conformément à l'invention, ce dispositif est remarquable en ce qu'il est constitué par un module de contrôle de l'orientation de chaque pièce passant par la conduite et par un moyen d'aspiration destiné à entraîner les pièces déjà en mouvement, à l'intérieur de la conduite de façon unitaire par accélération de la pièce la plus soumise à la dépression, la conduite étant située en prolongement du chemin de déplacement.

Cette caractéristique est particulièrement avantageuse en ce qu'elle propose une détection de l'orientation des pièces après leur sortie du bol vibrant et avant le passage dans le dispositif assurant la phase suivant celle de distribution. La prise d'une information sûre permet de diriger la pièce ou le rivet directement vers la phase suivante dans l'orientation dans laquelle il a été introduit dans la conduite ou d'être dirigé vers un dispositif de retournement afin d'assurer son retournement et présenter ainsi l'orientation recherchée. Le contrôle du passage des pièces permet de ne pas dépasser les capacités du moyen de contrôle de l'orientation. En outre, un tel dispositif pourra compter le nombre de pièces dont il contrôle l'orientation, ce qui constitue une fonctionnalité particulièrement intéressante dans le cadre d'une étape de conditionnement intermédiaire des pièces distribuées.

La mise en mouvement des pièces à l'intérieur du dispositif est assurée non par un moyen de mise en mouvement motorisé mais par la mise en circulation de l'air et donc la mise en dépression de la conduite par le moyen d'aspiration. Le choix de ce moyen de mise en mouvement est particulièrement judicieux en ce qu'il optimise le passage unitaire des pièces à l'intérieur du dispositif. En effet, l'aspiration n'aura d'effet que sur la pièce la plus proche de la conduite laissant en place la suivante beaucoup moins soumise à la dépression en étant plus éloignée et en étant gênée par la présence d'une première pièce. L'optimisation du sas formé par le module de commande de l'entrée de la conduite garantit un passage unitaire des pièces au niveau du module de contrôle et en conséquence une bonne détection de l'orientation desdites pièces.

Le dispositif de distribution de l'invention diffère de ce que propose l'art antérieur, en ce qu'il se situe en sortie d'un bol vibrant ou équivalent qui, par définition, assure le déplacement vers sa sortie des pièces qu'il stocke. En conséquence, les pièces que reçoit le dispositif de l'invention sont déjà en mouvement. L'aspiration n'a donc pas ici pour fonction de mettre en mouvement les pièces mais d'accélérer le mouvement de celle se trouvant à l'extrémité de sortie du chemin de déplacement à parcourir et garantir une entrée unitaire dans le dispositif de distribution lui-même soumis aux vibrations du bol. Le dispositif de distribution de pièces délivrées en sortie d'un bol vibrant répond donc à d'autres fonctions que celles requises pour un dispositif de distribution de pièces stockées dans un moyen plus classique. Il est le résultat d'un soucis constant des demandeurs cherchant à contrôler l'orientation des pièces le plus en amont possible du circuit de déplacement de ces dernières c'est à dire au niveau du moyen de stockage lequel est, dans ce cas, un moyen vibrant.

L'aspiration mise en oeuvre dans l'invention est donc un moyen d'accélération du mouvement de certaines pièces déjà en mouvement, cette aspiration garantissant que la pièce la plus soumise à la dépression sera la première et donc la seule à s'introduire dans le dispositif de distribution de l'invention.

Selon une autre caractéristique particulièrement avantageuse de l'invention, le dispositif de l'invention est fixé au bol vibrant auquel il est associé. Ainsi, le dispositif utilise judicieusement la mise en mouvement des pièces réalisée classiquement par un bol vibrant pour amener les pièces à l'entrée de la conduite.

L'invention concerne également le procédé de travail d'un tel dispositif ainsi que le bol vibrant adapté à un tel dispositif. Ce bol vibrant, présentant au niveau de sa sortie un chemin de déplacement desdites pièces, est remarquable en ce qu'il est préformé pour accueillir de manière fixe, le dispositif de l'invention.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un dispositif de distribution de son procédé de travail et du bol vibrant adapté, conforme à l'invention.

### BRÈVE DESCRIPTION DES DESSINS

La figure 1 est un dessin schématique d'une vue en perspective d'un mode de réalisation du dispositif de distribution conforme à l'invention fixé à un bol vibrant,
la figure 2 est un dessin schématique d'une vue en perspective du mode de réalisation illustré en figure 1 du dispositif de distribution seul,
les figures 3a, 3b, 3c, 3d sont des dessins schématiques en vue de dessus en coupe partielle d'un mode de réalisation du dispositif conforme à l'invention illustrant son fonctionnement,
la figure 4 est un dessin schématique en vue de dessus en coupe partielle d'un mode de réalisation du dispositif conforme à l'invention illustrant son fonctionnement avec pour matière d'oeuvre des rivets aveugles à distribuer.

### DESCRIPTION DES MODES DE RÉALISATION

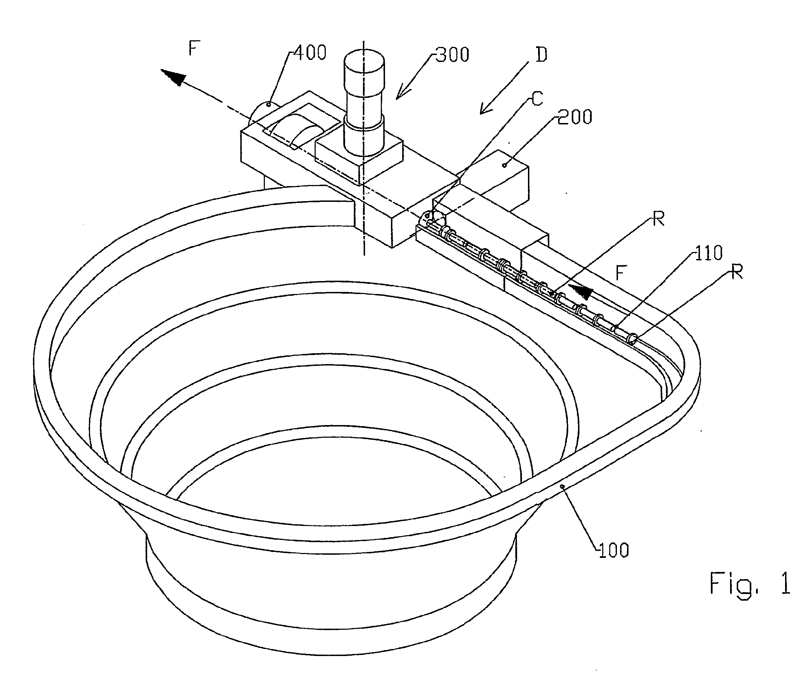

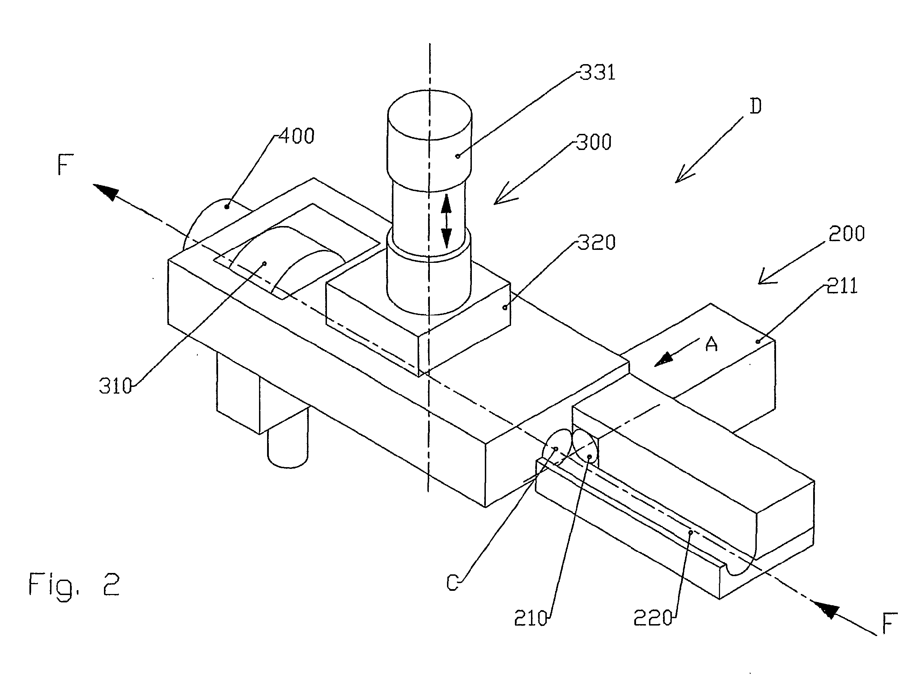

Comme illustré sur les dessins des figures 1 et 2, le dispositif de distribution de pièces à symétrie de révolution référencé D dans son ensemble, notamment de rivets référencés R, délivrées en sortie d'un moyen de stockage tel un bol vibrant référencé 100 qui présente au niveau de sa sortie 110 un chemin de déplacement desdites pièces R, est constitué par un module de commande 200 autorisant l'entrée une à une des pièces R délivrées par ledit moyen de stockage 100 à l'intérieur d'une conduite C et par un module de contrôle 300 de l'orientation de chaque pièce R passant par la conduite C.

Selon le mode de réalisation illustré en figure 1, le dispositif D est fixé au bol vibrant 100 auquel il est associé.

Conformément à l'invention, le dispositif D comporte un moyen d'aspiration non illustré tendant à entraîner les pièces R à l'intérieur de la conduite C et en assurer le déplacement à l'intérieur. Les pièces R suivent le cheminement illustré par les flèches référencées F qui sont ici parallèles à l'axe de la conduite C.

En effet, comme illustré et conformément à l'invention, l'axe longitudinal de ladite conduite C est disposé coaxialement à l'axe des pièces R. Ainsi, le diamètre de la conduite est défini de façon à ce que le plus grand diamètre des pièces de symétrie de révolution susceptibles d'être distribué dans le bol 100 puissent passer.

Selon l'invention et comme illustré plus en détails sur le dessin de la figure 2, ledit module de commande 200 est constitué par un premier moyen de détection non illustré et par un élément mobile 210 se plaçant devant l'entrée de la conduite C et dont la mise en mouvement à des fins de fermeture de l'entrée de la conduite C est commandée par la détection par ledit premier moyen de détection de l'entrée d'une pièce R à l'intérieur de la conduite C. Conformément à l'invention, les pièces R se présentent sous l'effet des vibrations du bol vibrant à l'entrée de la conduite C qui est soumise à une dépression tendant à aspirer les pièces R. Ainsi, la mise en mouvement vers le dispositif D est assurée par les vibrations du bol puis à l'intérieur de la conduite de façon unitaire du fait de la dépression exercée par le moyen d'aspiration.

Pour guider le cheminement des pièces R vers l'entrée de la conduite C, le module de commande 200 comporte avantageusement une rampe 220 en amont de l'entrée de la conduite C et venant en prolongement du chemin de déplacement préformé dans le bol vibrant 100 au niveau de sa sortie 110.

Une fois une pièce R entrée dans la conduite C, elle est détectée, le module de commande 200 actionne l'élément mobile 210 dans le sens de la flèche A pour obstruer l'entrée de la conduite C garantissant le passage unitaire des pièces R à l'intérieur du dispositif D évitant tout risque de bourrage ou de mauvaise détection de l'orientation de la pièce R.

Conformément à l'invention, l'élément mobile 210 de commande de l'entrée de la conduite C est actionné par un moyen de mise en mouvement de type vérin 211, l'élément mobile 210 constituant l'extrémité de la même tige de ce dernier (211). Selon le mode de réalisation illustré, l'axe de la tige du vérin 211 est perpendiculaire à l'axe de la conduite C, la sortie de tige (flèche A) barrant ainsi l'entrée de la conduite C, la rentrée de tige la libérant.

Conformément à l'invention, ledit module de contrôle 300 est constitué par un deuxième moyen de détection 310 placé immédiatement à côté d'un moyen escamotable de maintien en position 320 de la pièce R introduite dans la conduite C, l'absence ou la présence d'une partie de la pièce R du côté du moyen de maintien en position 320 où se trouve le moyen de détection 310 donnant ainsi l'information concernant l'orientation de la pièce R.

L'extrémité correspondant à la sortie de la conduite C est équipée d'un raccord 400 autorisant le lien avec tout moyen d'acheminement des pièces distribuées et dont l'orientation a été détectée.

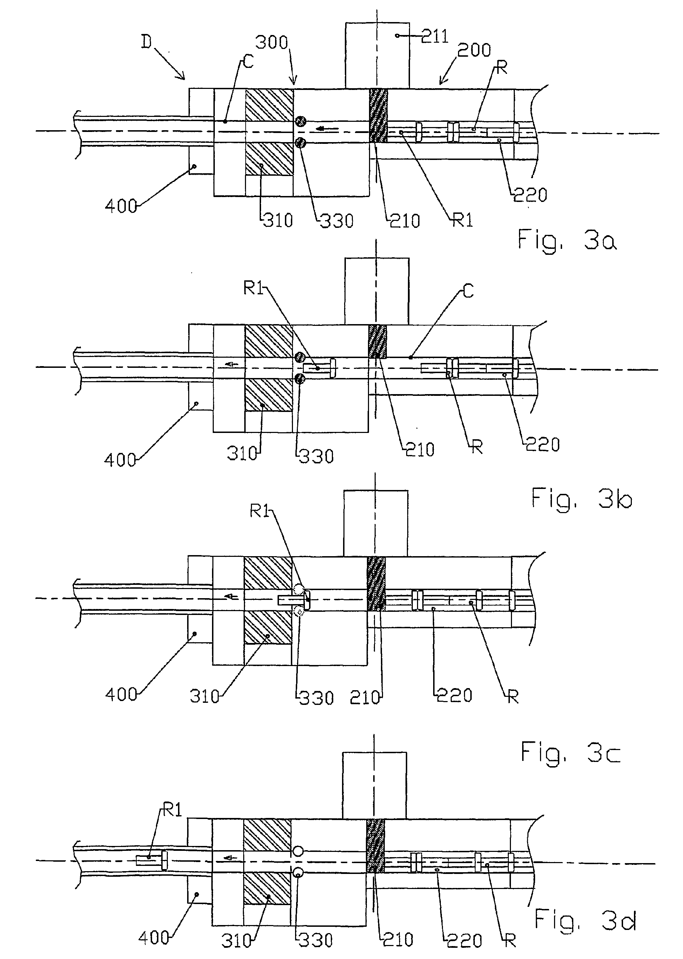

Le fonctionnement du dispositif de l'invention est illustré plus en détail par les dessins des figures 3a, 3b, 3c et 3d.

Comme illustré, ledit moyen de maintien en position 320 est constitué par une fourchette à deux branches 330 venant de part et d'autre de l'axe de la conduite C qu'elles obstruent et dont l'écartement détermine le diamètre de la partie susceptible de passer de la pièce R introduite dans la conduite C et venant en butée sur les branches 330 de la fourchette.

Selon le mode de réalisation illustré, la fourchette de maintien en position 330 est actionnée par un moyen de mise en mouvement de type vérin 331 (cf figure 2). La sortie de tige permet aux branches de la fourchette 330 d'obstruer la conduite C et la rentrée de tige permet d'en libérer le passage. Ainsi, l'élément mobile de commande de l'entrée de la conduite ainsi que la fourchette de maintien en position sont actionnés chacun par des moyens de mise en mouvement de type vérin.

Selon l'invention, le procédé de travail du dispositif décrit ci-dessus associé à un moyen de retournement des pièces R situé en aval du dispositif de distribution D, consiste, avec le moyen d'aspiration en marche et la fourchette 330 obstruant la conduite C tel qu'illustré en figure 3a :
- à ouvrir l'entrée de la conduite C en retirant l'élément mobile 210 comme illustrée en figure 3b rendant ainsi active la dépression,
- à laisser passer la pièce aspirée (laquelle sera référencée pour plus de clarté R1) qui, déjà en mouvement, est accélérée vers la conduite C sous l'action de l'aspiration,
- à fermer la conduite C par retour de l'élément mobile 210 lorsque le passage de la pièce R1 est détecté dans la conduite C (comme illustré en figure 3c),
- à détecter par le moyen de détection 310 la présence ou l'absence d'une tige de pièce R1 en aval de la fourchette 330 une fois R1 en butée sur les branches de la fourchette 330,
- à escamoter la fourchette 330 pour laisser passer la pièce R1,
- à aiguiller ou non la pièce R1 vers le moyen de retournement selon l'orientation souhaitée des pièces, et
- à obstruer la conduite C au moyen de la fourchette 330.

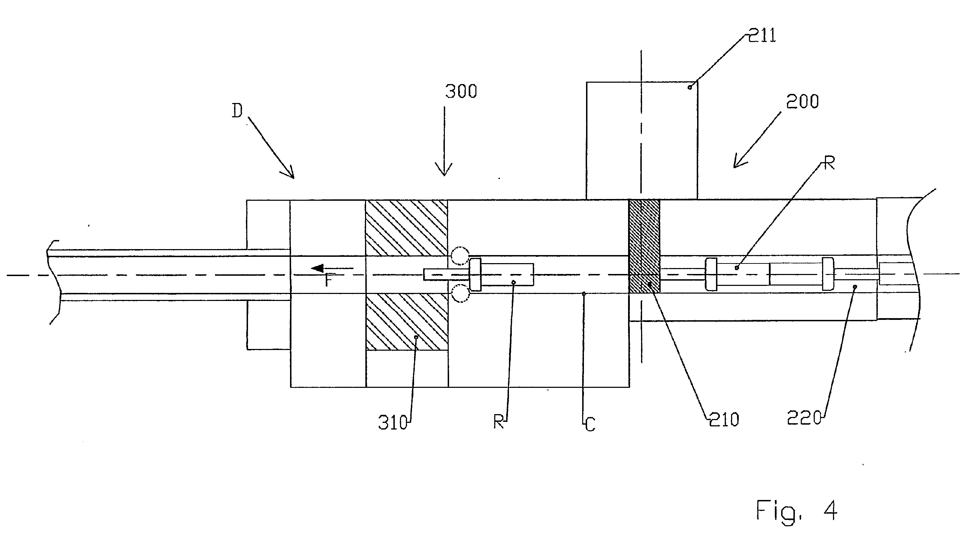

La figure 4 illustre une application à laquelle le dispositif est particulièrement adapté et utile. En effet, alors que les rivets à tête classique peuvent faire l'objet d'une orientation par exemple par gravité grâce au déséquilibre de masse et/ou de volume entre leur tige et leur tête, il n'en est pas de même avec les rivets aveugles qui présentent une tige de diamètre différent de part et d'autre de la tête. La tige de traction est celle présentant le diamètre le plus petit. Ainsi, afin de distribuer des rivets aveugles avec la tige de traction vers l'avant (relativement au sens d'avancée des pièces R illustré par la flèche F), l'écartement de la fourchette 330 est calculé de façon à laisser passer le petit diamètre de la tige de traction (comme illustré) et à ne pas laisser passer de diamètre plus grand. Ainsi, une fois la fourchette 330 obstruant la conduite C si le détecteur 300 détecte la présence d'une tige, il dirige la pièce directement vers l'actionneur réalisant l'étape suivante et non vers le dispositif de retournement. A contrario, si le module de détection 310 ne détecte pas la présence d'une tige, c'est que la tige de traction se trouve en arrière (relativement au sens d'avancée des pièces R illustré par la flèche F) requérant son aiguillage vers le dispositif de retournement.

La figure 1 illustre également un mode de réalisation d'un bol vibrant 100 conforme à l'invention présentant au niveau de sa sortie 110 un chemin de déplacement desdites pièces R et remarquable en ce qu'il est préformé pour accueillir de manière fixe, un dispositif D constitué par un module de commande 200 autorisant l'entrée une à une des pièces R délivrées par ledit bol 100 à l'intérieur d'une conduite C, par un module de contrôle 300 de l'orientation de chaque pièce R passant par la conduite C et par un moyen d'aspiration tendant à entraîner les pièces R à l'intérieur de la conduite C, le chemin de déplacement desdites pièces R étant coaxial avec ladite conduite C.

On comprend que le dispositif, le procédé et le bol vibrant, qui viennent d'être ci-dessus décrits et représentés, l'ont été en vue d'une divulgation plutôt que d'une limitation. Bien entendu, divers aménagements, modifications et améliorations pourront être apportés à l'exemple ci-dessus, sans pour autant sortir du cadre de l'invention telle que définie dans les revendications.

Ainsi, par exemple, le dispositif de l'invention peut être séparé matériellement du bol vibrant en restant simplement relié par un conduit d'amenée de pièces. En fait, le dispositif de l'invention est suffisamment proche de la sortie du chemin de déplacement du bol vibrant pour que l'aspiration puisse accélérer le déplacement de la première pièce se présentant en sortie et suffisamment éloigné pour que les vibrations du bol vibrant ne soient pas directement exercées sur le dispositif de distribution de l'invention.

## Revendications

1. Dispositif (D) de distribution de pièces (R) notamment de rivets, délivrées en sortie d'un moyen de stockage tel un bol vibrant (100) qui présente au niveau de sa sortie (110) un chemin de déplacement desdites pièces (R), le dispositif étant constitué par un module de commande (200) autorisant l'entrée une à une des pièces (R) délivrées par ledit moyen de stockage et de distribution (100) à l'intérieur d'une conduite (C), **CARACTÉRISÉ PAR LE FAIT QU'**il est constitué par :
- un module de contrôle (300) de l'orientation de chaque pièce (R) passant par la conduite (C), et
- un moyen d'aspiration destiné à entraîner les pièces (R) déjà en mouvement, à l'intérieur de la conduite (C) de façon unitaire par accélération de la pièce (R) la plus soumise à la dépression, la conduite C étant située en prolongement du chemin de déplacement.

2. Dispositif (D) selon la revendication 1, **CARACTÉRISÉ PAR LE FAIT QUE** l'axe longitudinal de ladite conduite (C) est disposé coaxialement à l'axe des pièces (R).

3. Dispositif (D) selon la revendication 1, **CARACTÉRISÉ PAR LE FAIT QUE** ledit module de commande (200) est constitué par un premier moyen de détection et par un élément mobile (210) se plaçant devant l'entrée de la conduite (C) et dont la mise en mouvement à des fins de fermeture de l'entrée de la conduite (C) est commandée par la détection par ledit premier moyen de détection de l'entrée d'une pièce (R) à l'intérieur de la conduite (C).

4. Dispositif (D) selon la revendication 1, **CARACTÉRISÉ PAR LE FAIT QUE** ledit module de contrôle (300) est constitué par un deuxième moyen de détection (310) placé immédiatement à côté d'un moyen escamotable de maintien en position (320) de la pièce (R) introduite dans la conduite (C), l'absence ou la présence d'une partie de la pièce (R) du côté du moyen de maintien en position (320) où se trouve le moyen de détection (310) donnant ainsi l'information concernant l'orientation de la pièce (R).

5. Dispositif (D) selon la revendication 4, **CARACTÉRISÉ PAR LE FAIT QUE** ledit moyen de maintien en position (320) est constitué par une fourchette à deux branches (330) venant de part et d'autre de l'axe de la conduite (C) qu'elles obstruent et dont l'écartement détermine le diamètre de la partie susceptible de passer de la pièce (R) introduite dans la conduite (C) et venant en butée sur les branches (330) de la fourchette .

6. Dispositif (D) selon les revendications 3 et 5, **CARACTÉRISÉ PAR LE FAIT QUE** l'élément mobile de commande (210) de l'entrée de la conduite ainsi que la fourchette (330) de maintien en position sont actionnés chacun par des moyens de mise en mouvement de type vérin (211 et 331).

7. Dispositif (D) selon la revendication 1 du type de celui associé à un bol vibrant (100), **CARACTÉRISÉ PAR LE FAIT QU'**il est fixé au bol vibrant (100) auquel il est associé.

8. Procédé de travail d'un dispositif (D) de distribution de pièces (R) notamment de rivets délivrées par un moyen de stockage et de distribution tel un bol vibrant (100) selon l'ensemble des revendications 1 à 6 prises ensemble, associé à un moyen de retournement des pièces (R) situé en aval du dispositif (D), **CARACTÉRISÉ EN CE Qu'**il consiste avec le moyen d'aspiration en marche et la fourchette (330) obstruant la conduite (C) ;
- à ouvrir l'entrée de la conduite (C) en retirant l'élément mobile (210),
- à laisser passer la pièce aspirée (R1),
- à fermer la conduite (C) par retour de l'élément mobile (310) lorsque le passage de la pièce (R1) est détecté dans la conduite (C),
- à détecter la présence ou l'absence d'une tige en aval de la fourchette (330),
- à escamoter la fourchette (330) pour laisser passer la pièce (R1),
- à aiguiller ou non la pièce (R1) vers le moyen de retournement selon l'orientation souhaitée des pièces, et
- à obstruer la conduite (C) au moyen de la fourchette (330).

## Claims

1. Device (D) for the distribution of components (R), and in particular rivets, delivered at the outlet of a storage means such as a vibratory bowl (100) which has at its outlet (110) a path for the displacement of said components (R), the device being constituted by a control unit (200) that authorises the components (R) delivered by said storage and distribution means (100) to enter one by one inside a conduit (C), **characterised in that** it is constituted by:
- a unit (300) for controlling the orientation of each component (R) passing through the conduit (C), and
- a suction means intended to draw the already moving components (R) inside the conduit (C) individually by accelerating the component (R) most subject to negative pressure, the conduit (C) being located as an extension of the displacement path.

2. Device (D) according to claim 1, **characterised in that** the longitudinal axis of said conduit (C) is arranged coaxially to the axis of the components (R).

3. Device (D) according to claim 1, **characterised in that** said control unit (200) is constituted by a first detection means and by a mobile element (210) that places itself in front of the inlet of the conduit (C) and the setting in motion of which, for purposes of closing the inlet of the conduit (C), is controlled by the detection by said first detection means of the entry of a component (R) inside the conduit (C).

4. Device (D) according to claim 1, **characterised in that** said control unit (300) is constituted by a second detection means (310) placed immediately next to a retractable means (320) for maintaining the component (R) introduced into the conduit (C) in position, the absence or presence of a part of the component (R) on the side of the position maintenance means (320) where the detection means (310) is located thereby giving the information relating to the orientation of the component (R).

5. Device (D) according to claim 4, **characterised in that** said position maintenance means (320) is constituted by a fork with two tines (330) coming on either side of the axis of the conduit (C) which they block and the separation of which determines the diameter of the part able to pass of the component (R) introduced into the conduit (C) and coming to a stop on the tines (330) of the fork.

6. Device (D) according to claims 3 and 5, **characterised in that** the mobile element (210) controlling the conduit inlet and the position maintenance fork (330) are each activated by setting in motion means of the jack type (211 and 331).

7. Device (D) according to claim 1 such as that associated with a vibratory bowl (100), **characterised in that** it is anchored to the vibratory bowl (100) with which it is associated.

8. Working method of a device (D) for the distribution of components (R) in particular rivets delivered by a storage and distribution means such as a vibratory bowl (100) according to all of claims 1 to 6 taken together, associated with a means for turning over the components (R) located downstream from the device (D), **characterised in that** it consists with the suction means in operation and the fork (330) blocking the conduit (C):
- in opening the inlet of the conduit (C) by withdrawing the mobile element (210),
- in allowing the sucked up component (R1) to pass through,
- in closing the conduit (C) by bringing back the mobile element (310) when the passage of the component (R1) is detected in the conduit (C),
- in detecting the presence or absence of a pale downstream from the fork (330),
- in retracting the fork (330) to allow the component (R1) to pass through,
- in orientating or not orientating the component (R1) towards the turnover means in accordance with the required orientation of the components, and
- in blocking the conduit (C) by means of the fork (330).

## Patentansprüche

1. Vorrichtung (D) zur Verteilung von Stücken (R) insbesondere Niete, die am Ausgang eines Lagermittels bereitgestellt werden, wie zum Beispiel einem Rüttler (100), der im Bereich seines Ausgangs (110)eine Verschiebungsstrecke der besagten Stücke (R) aufweist, wobei die Vorrichtung durch ein Steuermodul (200) gebildet wird, das den Eintritt der Stücke (R), die von dem besagten Lager- und Verteilungsmittel (100) bereitgestellt werden, nacheinander in eine Leitung (C)ermöglicht, **DADURCH GEKENNZEICHNET, DASS** SIE aus Folgendem besteht:
- einem Kontrollmodul (300) zur Ausrichtung jedes Stücks (R), das durch die Leitung (C) verläuft und
- einem Ansaugmittel, das zur Mitnahme der bereits in Bewegung befindlichen Stücke (R) in der Leitung (C) bestimmt ist und Stücks (R), das am meisten dem Unterdruck unterliegt, wobei sich die Leitung (C) in der Verlängerung der Verschiebungsstrecke befindet.

2. Vorrichtung (D) gemäß Anspruch 1, **DADURCH GEKENNZEICHNET, DASS** die Längsachse der besagten Leitung (C) koaxial zur Achse der Stücke (R) angeordnet ist.

3. Vorrichtung (D) gemäß Anspruch 1, **DADURCH GEKENNZEICHNET, DASS** das besagte Steuerungsmodul (200) aus einem ersten Erfassungsmittel und einem beweglichen Element (210) besteht, das sich vor dem Eingang der Leitung (C) befindet und dessen Inbewegungsetzung, die dazu dient, den Eingang der Leitung (C) zu schließen, durch die Erfassung durch das besagte erste Erfassungsmittel des Eingangs eines Stücks (R) in der Leitung (C) gesteuert wird.

4. Vorrichtung (D) gemäß Anspruch 1, **DADURCH GEKENNZEICHNET, DASS** das besagte Kontrollmodul (300) aus einem zweiten Erfassungsmittel (310) besteht, das sich unmittelbar neben einem einziehbaren Mittel befindet, das dazu dient, das Stück (R) in Stellung zu halten, das in die Leitung (C) eingeführt wurde, wobei das Fehlen oder Vorhandensein eines Teils des Stücks (R) auf der Seite des Mittels zur Beibehaltung der Position (320), wo sich das Erfassungsmittel (310) befindet, das auf diese Weise die Information in Bezug auf die Ausrichtung des Stücks (R) gibt.

5. Vorrichtung (D) gemäß Anspruch 4, **DADURCH GEKENNZEICHNET, DASS** das besagte Mittel zur Beibehaltung der Position (320) aus einer Gabel mit zwei Armen (330), die auf der einen und anderen Seite der Achse der Leitung (C) herauskommen, die sie blockieren und deren Abstand den Durchmesser des Teils festlegt, der durch das Stück (R) verlaufen kann, das in die Leitung (C) eingeführt wurde und auf den Armen (330) der Gabel anschlägt.

6. Vorrichtung (D) gemäß Anspruch 3 und 5, **DADURCH GEKENNZEICHNET, DASS** das bewegliche Steuerungselement (210) des Eingangs der Leitung sowie die Gabel (330) zur Beibehaltung der Position jeweils durch Mittel zur Inbewegungsetzung, Typ Zylinder (211 und 331), angetrieben werden.

7. Vorrichtung (D) gemäß Anspruch 1, deren Typ demjenigen entspricht, der mit einem Rüttler (100) verbunden ist, **DADURCH GEKENNZEICHNET, DASS** sie auf dem Rüttler (100) befestigt ist, mit dem sie verbunden ist.

8. Arbeitsverfahren einer Vorrichtung (D) zur Verteilung von Stücken (R), insbesondere Niete, die durch ein Mittel zur Lagerung und Verteilung bereitgestellt werden, wie zum Beispiel ein Rüttler (100), gemäß der Zusammenfassung der gesamten Ansprüche 1 bis 6, die mit einem Mittel zur Umkehrung der Stücke (R) verbunden ist, das sich unter der Vorrichtung (D) befindet, **DADURCH GEKENNZEICHNET, DASS** das Verfahren mit dem laufenden Mittel zur Ansaugung und der Gabel (330), die die Leitung (C) blockiert, in Folgendem besteht:
- Öffnen des Eingangs der Leitung (C) durch Entfernung des beweglichen Elementes (210),
- Ermöglichen der Durchführung des abgesaugten Stücks (R1) ,
- Schließen der Leitung (C) durch Rückführung des beweglichen Elementes (310), wenn die Durchführung des Stücks (R1) in der Leitung (C)erfasst wurde,
- Erfassung des Vorhandenseins oder des Fehlens einer Stange unter der Gabel (330),
- Einziehen der Gabel (330), um die Durchführung des Stücks (R1) zu ermöglichen,
- Lenken oder nicht des Stücks (R1) in Richtung des Rückführungsmittels gemäß der gewünschten Ausrichtung der Teile und
- Blockierung der Leitung (C) mit Hilfe der Gabel (330).
